# FASCICULE DE BREVET EUROPEEN

(11) **EP 0 819 858 B1**
(45) Date de publication et mention de la délivrance du brevet: **27.03.2002**
(21) Numéro de dépôt: 97410076.0
(22) Date de dépôt: 16.07.1997
(51) Int. Cl.: F16B 37/06

(54) **Ecrou noyé à sertir en aveugle et à tête fine encastrée**
Krimpmutter mit eingebettetem Kopf
Clinch nut with embedded head

(30) Priorité: 19.07.1996 FR 9609335
(43) Date de publication de la demande: 21.01.1998
(73) Titulaire: Bollhoff Otalu S.A., 73490 La Ravoire (FR)
(72) Inventeur: Gory, Philippe, 73160 St Thibaud de Couz (FR)
(74) Mandataire: Hecké, Gérard

(56) Documents cités:
- CH-A- 503 212
- DE-U- 8 519 745
- FR-A- 1 297 093
- US-A- 3 215 026
- US-A- 3 750 525

## Description

L'invention est relative à un écrou noyé à sertir en aveugle, comprenant,
- un corps métallique à fût de section polygonale prolongé par une base à trou interne cylindrique équipé d'un filetage constituant un taraudage, le fût étant destiné à coopérer avec un logement d'une pièce de support métallique,
- une collerette ménagée à la partie supérieure du fût pour délimiter une tête fine de l'écrou, la hauteur de la collerette étant petite par rapport à celle du fût, et
- l'épaisseur de la paroi du fût étant inférieure à celle de la base pour permettre la formation d'un bourrelet de maintien lors du sertissage de l'écrou dans le logement de la pièce de support, ledit logement ayant une forme conjuguée au fût polygonal.

L'obtention classique d'une tête d'écrou noyée parfaitement affleurante à la surface du support métallique, nécessite une préparation spécifique du logement, soit en réalisant une fraisure pour les logements ronds, soit en réalisant un embouti dans la tôle lors du poinçonnage du logement. Pour éviter ces opérations, il est courant d'utiliser des écrous noyés à têtes réduites présentant un léger dépassement dans le cas de matériaux relativement mous.

Les têtes les plus fines sont généralement obtenues par décolletage, mais ont l'inconvénient d'avoir une résistance à la poussée insuffisante.

Un autre type d'écrou noyé connu décrit dans le document US-A-3215026 utilise un fût cylindrique moleté, dont les stries s'étendent parallèlement selon des génératrices jusqu'au niveau de la tête fine . La présence de ces stries permet d'immobiliser l'écrou en rotation lors du vissage de la vis. Le sertissage doit dans ce cas être effectué avec précision pour obtenir un blocage en rotation efficace de l'écrou noyé.

L'objet de l'invention consiste à réaliser un écrou noyé à sertir en aveugle, et à tête fine encastrée ayant une bonne tenue mécanique à la poussée, et bénéficiant d'un blocage en rotation efficace après sertissage.

L'écrou noyé selon l'invention est caractérisé en ce que la face inférieure de la collerette comporte une pluralité d'organes de crantage répartis à intervalles réguliers autour de la tête, chaque organe de crantage étant conformé selon une dent prismatique s'incrustant lors du sertissage dans le métal de la pièce de support en transférant le métal en excès vers les creux ménagés entre les dents successives de la collerette, la tête de l'écrou étant complètement noyée et sertie dans le logement, l'arête extérieure inclinée de chaque dent de la collerette fait un premier angle (B) aigu, voisin de 30° à 45° avec le plan vertical parallèle à l'axe de l'écrou.

L'effet de blocage en rotation est assuré par la forme polygonale en fût, et la présence des organes de crantage sous la collerette favorise l'incrustation de la tête d'écrou dans le logement.

Selon un mode de réalisation préférentiel, le creux délimité entre les faces adjacentes de deux dents successives forme un deuxième angle (C) aigu de l'ordre de 5° à 30° avec le plan horizontal de la tête.

Le fût de l'écrou possède avantageusement une forme hexagonale, et le fond de la base peut être ouvert ou fermé.

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue de l'écrou noyé selon l'invention, la demi-vue de droite étant une vue en élévation, et la demi-vue de gauche étant représentée en coupe suivant un plan vertical;
- la figure 2 est une vue en coupe selon la ligne 2-2 de la figure 1;
- la figure 3 est une vue partielle à échelle agrandie de la figure 1, montrant le fût hexagonal à collerette crantée;
- la figure 3A est une vue de détail d'une dent de la collerette;
- la figure 4 est une vue en coupe à travers le logement de la pièce de support pour la réception de l'écrou noyé;
- la figure 5 représente le montage final de l'écrou noyé et serti dans le logement de la pièce de support suivant la figure 4.

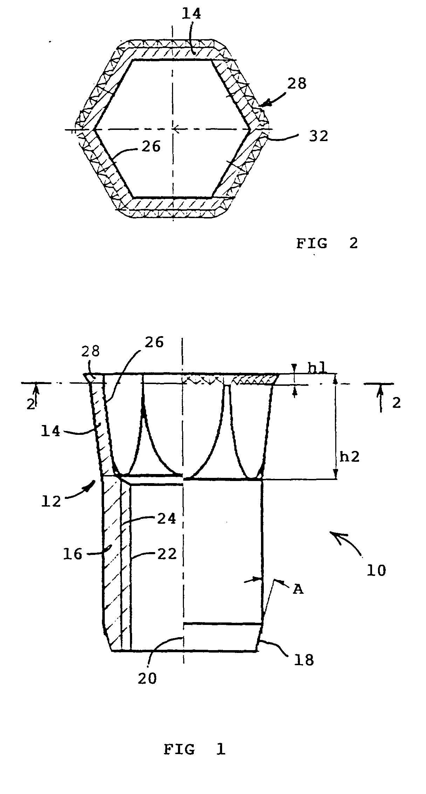

En référence aux figures 1 et 2, un écrou 10 noyé à sertir en aveugle, comporte un corps 12 métallique à fût 14 hexagonal prolongé vers le bas par une base 16 de section quelconque. La partie inférieure 18 de la base 16 est ouverte et présente une forme tronconique, faisant un angle A voisin de 15° avec l'axe 20 de l'écrou 10. L'intérieur creux de la base 16 comprend un trou 22 cylindrique équipé d'un filetage 24 pour constituer un taraudage après sertissage de l'écrou 10 sur une pièce de support.

Le fût 14 hexagonal est également creux, et comporte un orifice 26 hexagonal disposé coaxialement avec le trou 22 de la base 16. L'épaisseur de la paroi constitutive du fût 14 est inférieure à celle de la base 16 pour permettre la formation d'un bourrelet d'assemblage lors de l'opération de sertissage. Les faces externes du fût 14 et de la base 16 sont lisses sans aucun moletage.

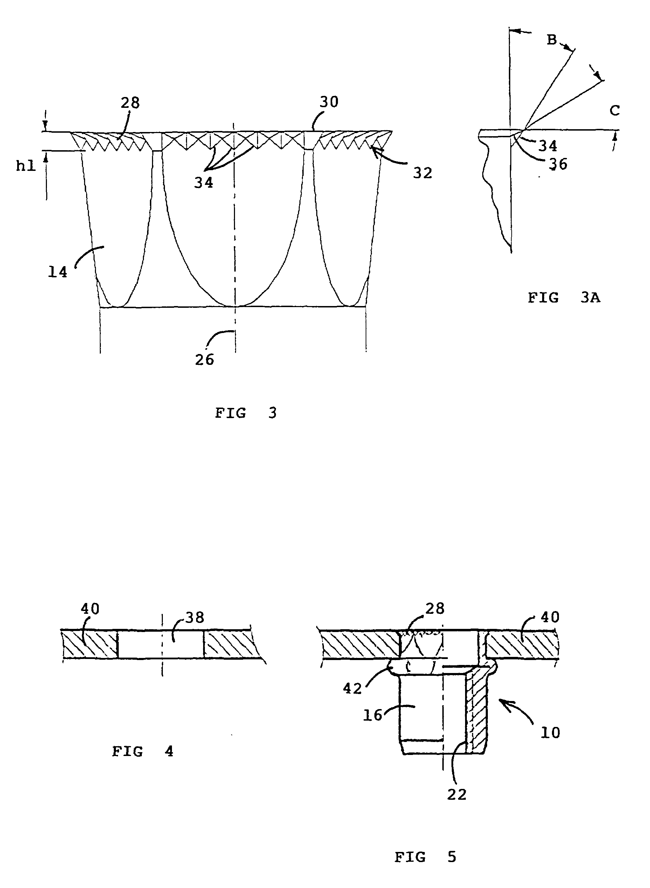

La partie supérieure du fût 14 comporte une collerette 28 d'incrustation montrée en détail à la figure 3, et constituant la tête fine de l'écrou 10. La section hexagonal de la collerette 28 est légèrement supérieure à celle du fût 14, et sa face d'accès 30 supérieure est lisse. La face inférieure d'incrustation de la collerette 28 est équipée d'organes de crantage 32 comprenant une succession de dents 34 saillantes, notamment de formes prismatiques réparties à intervalles angulaires réguliers autour de la tête. La hauteur h1 de la collerette 28 est très petite par rapport à celle h2 du fût 14, par exemple de l'ordre de 0,7 à 1,2 mm.

Sur la figure 3A, l'arête extérieure inclinée d'une dent 34 prismatique de la collerette 28 fait un premier angle B aigu voisin de 30° à 45° avec le plan vertical parallèle à l'axe 26. Le creux 36 délimité entre les faces adjacentes de deux dents 34 successives forme un deuxième angle C aigu de l'ordre de 5° à 30° avec le plan horizontal de la tête. Un tel agencement des organes de crantage 32 sous la collerette 28 favorise lors du sertissage, l'insertion de la tête de l'écrou 10 dans le logement 38 hexagonal de la pièce de support 40 métallique (figure 4). Les dents 34 s'incrustent dans le métal de la pièce de support 40, en transférant le métal en excès vers le creux 36 de la collerette 28. Il en résulte un ancrage total de la tête de l'écrou 10 dans la pièce support 40, même en cas d'écrasement partiel des dents 34 lors de leur incrustation.

Dans la figure 4, le logement 38 hexagonal est obtenu par une simple opération de poinçonnage de la pièce de support 40, la dimension du logement 38 étant légèrement inférieure à celle de la collerette 28 de l'écrou 10.

Après l'opération de sertissage de l'écrou 10 illustré sur la figure 5, la tête est complètement noyée et sertie dans le logement 38. Un bourrelet 42 de sertissage résultant de la déformation du fût 14, assure le maintien de l'écrou 10 contre la face inférieure de la pièce de support 40. La pénétration des dents 34 dans le métal de la pièce de support 40 augmente la résistance à la poussée, alors que le blocage en rotation est assuré principalement par la forme hexagonale du fût 14.

Le crantage de la collerette 28 peut être réalisé sur tout autre type d'écrou noyé à fût de section polygonale, et de matière métallique quelconque, notamment en acier inoxydable ou non, laiton, aluminium.

Selon une variante, la base 16 peut avoir la même section polygonale que celle du fût 14. Le fond de la base 16 au lieu d'être ouvert, peut également être fermé pour former un taraudage borgne.

## Revendications

1. Écrou noyé à sertir en aveugle, comprenant,
- un corps (12) métallique à fût (14) de section polygonale, prolongé par une base (16) à trou (22) interne cylindrique équipé d'un filetage (24) constituant un taraudage, le fût étant destiné à coopérer avec un logement (38) d'une pièce de support (40) métallique,
- une collerette (28) ménagée à la partie supérieure du fût (14) pour délimiter une tête fine de l'écrou (10), la hauteur (h1) de la collerette (28) étant petite par rapport à celle (h2) du fût (14), et
- l'épaisseur de la paroi du fût (14) étant inférieure à celle de la base (16) pour permettre la formation d'un bourrelet (42) de maintien lors du sertissage de l'écrou (10) dans le logement (38) de la pièce de support (40) métallique, ledit logement (38) ayant une forme conjuguée au fût (14) polygonal,
**caractérisé en ce que**
- la face inférieure de la collerette (28) comporte une pluralité d'organes de crantage (32) répartis à intervalles réguliers autour de la tête, chaque organe de crantage (32) étant conformé selon une dent (34) prismatique s'incrustant lors du sertissage dans le métal de la pièce de support (40) en transférant le métal en excès vers les creux (36) ménagés entre les dents (34) successives de la collerette (28), la tête de l'écrou (10) étant complètement noyée et sertie dans le logement (38),
- l'arête extérieure inclinée de chaque dent (34) de la collerette (28) fait un premier angle (B) aigu, voisin de 30° à 45° avec le plan vertical parallèle à l'axe (20) de l'écrou (10).

2. Écrou selon la revendication 1, **caractérisé en ce que** le creux (36) délimité entre les faces adjacentes de deux dents (34) successives forme un deuxième angle (C) aigu de l'ordre de 5° à 30° avec le plan horizontal de la tête.

3. Écrou selon la revendication 1, **caractérisé en ce que** le fût (14) de corps (12) possède une forme hexagonale.

4. Écrou selon la revendication 3, **caractérisé en ce que** le fond de la base (16) est ouvert.

5. Écrou selon la revendication 4, **caractérisé en ce que** le fond de la base (16) est fermé pour former un taraudage borgne.

## Claims

1. A countersunk nut to be blind crimped, comprising,
- a metal body (12) with a shank (14) of polygonal cross-section, extended by a base (16) with a cylindrical internal hole (22) equipped with a thread (24) forming a tapping, the shank being designed to operate in conjunction with a housing (38) of a metal support part (40),
- a skirt (28) arranged on the upper part of the shank (14) to bound a fine head of the nut (10), the height (h1) of the skirt (28) being small in comparison with that (h2) of the shank (14), and
- the thickness of the wall of the shank (14) being smaller than that of the base (16) to enable formation of a securing rim (42) when crimping of the nut (10) in the housing (38) of the metal support part (40) is performed, said housing (38) having a conjugate shape to that of the polygonal shank (14),
**characterized in that**
- the bottom face of the skirt (28) comprises a plurality of notching means (32) arranged at regular intervals around the head, each notching means (32) being shaped as a prismatic tooth (34) inlayed when crimping is performed in the metal of the support part (40) transferring the excess metal to the recesses (36) arranged between the successive teeth (34) of the skirt (28), the head of the nut (10) being completely countersunk and crimped in the housing (38),
- the inclined external edge of each tooth (34) of the skirt (28) makes a first acute angle (B) close to 30° to 45° with the vertical plane parallel to the axis (20) of the nut (10).

2. The nut according to claim 1, **characterized in that** the recess (36) bounded between the adjacent faces of two successive teeth (34) forms a second acute angle (C) of about 5° to 30° with the horizontal plane of the head.

3. The nut according to claim 1, **characterized in that** the shank (14) of the body (12) has a hexagonal shape.

4. The nut according to claim 3, **characterized in that** the bottom of the base (16) is open.

5. The nut according to claim 4, **characterized in that** the bottom of the base (16) is closed to form a blind tapping.

## Patentansprüche

1. Crimpmutter mit eingebettetem Kopf, die umfasst:
- einen metallenen Körper (12) mit einem Schaft (14) mit polygonalem Querschnitt, der durch einen Sockel (16) mit einer zylindrischen Innenöffnung (22) verlängert ist, die mit einem Gewinde (24) versehen ist, das ein Innengewinde bildet, wobei der Schaft dazu vorgesehen ist, mit einer Aufnahme (38) für ein Halteelement (40) aus Metall zusammenzuwirken,
- einen Kragen (28), der im oberen Bereich des Schafts (14) vorgesehen ist und einen dünnen Kopf der Mutter (10) bildet, wobei die Höhe (h1) des Kragens (28) bezüglich derjenigen (h2) des Schafts (14) gering ist, und
- wobei die Dicke der Wand des Schafts (14) geringer ist als die des Sockels (16), um die Bildung eines Haltewulstes (42) beim Crimpen der Mutter (10) in die Aufnahme (38) des metallenen Halteelements (40) zu ermöglichen, welche Aufnahme (38) eine zum polygonalen Schaft (14) passende Form hat,
**dadurch gekennzeichnet, dass**
- die untere Seite des Kragens (28) eine Mehrzahl von Verzahnungselementen (32) aufweist, die in gleichmäßigem Abstand um den Kopf herum angeordnet sind, wobei jedes Verzahnungselement (32) als prismenförmiger Zahn (34) ausgebildet ist, der sich beim Crimpen in das Metall des Halteelements (40) bohrt und das überschüssige Metall zu den Hohlräumen (36) schiebt, die zwischen den aufeinander folgenden Zähnen (34) des Kragens (28) vorgesehen sind, sodass der Kopf der Mutter (10) vollkommen in die Aufnahme (38) versenkt und gecrimpt wird,
- wobei die geneigte Außenkante jedes Zahns (34) des Kragens (28) einen ersten spitzen Winkel (B) von etwa 30 bis 45° mit der zur Achse (20) der Mutter (10) parallelen, vertikalen Ebene bildet.

2. Mutter nach Anspruch 1, **dadurch gekennzeichnet, dass** der Hohlraum (36), der zwischen den angrenzenden Seiten zweier aufeinanderfolgender Zähne (34) gebildet ist, einen zweiten spitzen Winkel (C) von etwa 5 bis 30° mit der Horizontalebene des Kopfes bildet.

3. Mutter nach Anspruch 1, **dadurch gekennzeichnet, dass** der Schaft (14) des Körpers (12) eine sechseckige Form hat.

4. Mutter nach Anspruch 3, **dadurch gekennzeichnet, dass** der Boden des Sockels (16) offen ist.

5. Mutter nach Anspruch 4, **dadurch gekennzeichnet, dass** der Boden des Sockels (16) geschlossen ist und ein Blindgewinde bildet.
